# FASCICULE DE BREVET EUROPEEN

(11) **EP 2 349 893 B1**
(45) Date de publication et mention de la délivrance du brevet: **12.12.2012**
(21) Numéro de dépôt: 09736907.8
(22) Date de dépôt: 13.10.2009
(51) Int. Cl.: B65H 29/16, B29D 30/00

(54) **TAPIS DE TRANSFERT DE NAPPES COMPORTANT DES RENFORTS METALLIQUES**
LAGENÜBERTRAGUNGSBAND MIT METALLVERSTÄRKUNGEN
PLY TRANSFER BELT INCLUDING METAL REINFORCEMENTS

(30) Priorité: 27.10.2008 FR 0857280
(43) Date de publication de la demande: 03.08.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: RAVAT, Stéphane, F-63122 Saint Genes Champanelle (FR); DUBOIS, Clément, F-63000 Clermont-Ferrand (FR); MARCHAL, Patrick, F-63000 Clermont-Ferrand (FR)
(74) Mandataire: Reynaud, Georges
(86) Numéro de dépôt international: PCT/EP2009/063320
(87) Numéro de publication internationale: WO 2010/049266

(56) Documents cités:
- EP-A- 0 343 426
- EP-A- 0 537 348
- EP-A- 1 074 494
- JP-A- 59 187 836
- JP-A- 62 011 634
- JP-A- 2007 186 340
- US-A- 4 411 724
- US-A- 4 769 104

## Description

Le domaine de l'invention concerne la fabrication des nappes de renfort destinées à être employées dans la construction des pneumatiques destinés à être montés sur des véhicules de transport. Plus spécifiquement, l'invention traite du problème du passage d'un tronçon de nappe de renfort entre deux tapis de transfert.

La fabrication des nappes de renfort destinée à la construction des pneumatiques est largement connue de l'état de la technique et consiste à prélever, dans une nappe continue dite nappe droit fil, selon un angle de coupe b donné, des tronçons de nappes d'une largeur donnée, et désignés ci-après sous le nom de laizes. La nappe droit fil est constituée de fils enrobés d'un mélange de caoutchouc, parallèles entre eux et orientés dans la direction longitudinale de la nappe. Les laizes sont mises bout à bout pour constituer une bande continue de renfort. Les fils de renfort font un angle b avec la direction longitudinale de la bande de renfort. Cet angle b est non nul et inférieur à 90°. La valeur de l'angle b est généralement comprise entre 15° et 70°.

Dans une deuxième étape, au cours du processus d'assemblage, on prélève des tronçons de nappe de renfort, ou nappe de renfort, dans la bande de renfort. La longueur de ces tronçons de nappe de renfort est ajustée en fonction de la circonférence de pose de ladite nappe de renfort sur le moyen d'assemblage des nappes de renfort tel qu'une forme sommet, généralement cylindrique.

La découpe des tronçons de nappe de renfort se fait le entre deux fils de renfort. Aussi, avant la pose, la nappe de renfort se présente sous la forme d'un parallélogramme dont les lisières avant et arrière font un angle b avec la direction longitudinale de la nappe de renfort et dont les lisières latérales sont parallèles à cette même direction.

Une attention particulière est apporté à la conservation des caractéristiques géométriques de la nappe de renfort tout au long du processus, depuis l'étape de découpe et mise à longueur, jusqu'au transfert final sur la forme d'assemblage. Il convient en effet d'éviter, autant que faire se peut, les déformations susceptibles de modifier la longueur de la nappe de renfort ou d'altérer l'angle des fils, en particulier lorsque l'on désire automatiser l'ensemble du processus.

A cet effet, il est connu, lorsque les fils de renfort possèdent des propriétés magnétiques, de transférer les nappes de renfort mises à longueur à l'aide de tapis magnétiques aptes à priver la nappe de renfort de tout mouvements parasites pendant son transfert depuis le poste de coupe jusqu'à la forme sommet.

Il peut s'avérer également intéressant de faire passer la nappe de renfort mise à longueur depuis un premier tapis de transfert vers un deuxième tapis de transfert dédié à la fonction d'approche et de pose de la nappe de renfort sur la forme d'assemblage

Les deux tapis sont alors superposés sur une certaine longueur et distant d'une valeur aussi faible que possible, mais supérieure à l'épaisseur de la nappe de renfort, de manière à assurer le passage de la nappe de renfort depuis le premier tapis vers le second tapis avec le moins de déplacements parasites possibles desdites nappes.

A titre d'exemple, les publications US 4 411 724, JP59 187838 ou encore US 4 769 104 décrient des tapis de transfert de ce type, dans lesquels la force d'attraction des moyens électromagnétiques du second tapis est supérieure à la force d'attraction des moyens magnétiques du premier tapis, permanent de faire passer une nappe métallique du premier tapis vers le second tapis. Les zones aimantées du premier et du deuxième tapis se superposent.

Toutefois, dans le cas des nappes de renfort dont la géométrie s'assimile à cette d'un parallélogramme non rectangle, il est difficile de contrôler le passage de la pointe arrière de la nappe de renfort sur le second tapis sans modifier la position de la pointe avant de la nappe de renfort suivante, et destinée à demeurer sur le premier tapis, En effet les nappes consécutives en aval de l'outil de coupe sont jointives au niveau de la partie arrière de la nappe de renfort avant ou première nappe de renfort, et de la partie de la nappe de renfort suivante ou deuxième nappe de renfort.

La forme des tapis de transfert étant généralement rectangulaire, il est difficile de conserver l'aimantation sous la pointe avant de la seconde nappe de renfort, tout en relâchant cette même aimantation sous la point arrière de la première nappe de renfort de manière à ce que ladite pointe arrière de la première nappe de renfort puisse passer du premier tapis vers le second tapis.

L'invention a pour objet est de proposer un dispositif de transfert susceptible d'apporter une solution à ce problème.

Selon l'invention, le dispositif destiné au transfert d'une nappe de renfort ayant la forme générale d'un parallélogramme non rectangle et comportant des fils de renfort ayant des propriétés magnétiques et faisant un angle donné b, avec la direction longitudinale de la nappe de renfort, comprend au moins deux tapis de transfert superposés sur une longueur l donnée, et séparés d'une distance e donnée et de faible valeur.

Chacun des tapis comprend une zone aimantée de forme trapézoïdale dont les bases sont parallèles à la direction longitudinale des tapis et destinées à plaquer la nappe de renfort contre la surface mobile desdits tapis de transfert.

Ce dispositif de transfert se caractérise en ce que, dans la zone où les tapis se superposent, le coté du trapèze reliant les deux bases de la zone aimantée (23) du second tapis (2) forme un angle a₂ avec la direction longitudinale inférieur ou égal à 90°, et le coté du trapèze reliant les deux bases de la zone aimantée (13) du premier tapis (1) forme un angle a₁ avec la direction longitudinale inférieur à l'angle a₂, et en ce que les zones aimantées des deux tapis ne se superposent pas, de manière à former une zone non aimantée placée au droit de la zone de superposition des tapis de transfert.

L'angle b des fils étant conventionnellement inférieur à 90°, on s'arrange alors pour que l'angle a₁ soit inférieur à l'angle b des fils, et que l'angle a₂ soit supérieur ou égal à l'angle b des fils.

De cette manière lorsque deux nappes de renfort consécutives, se présentent dans la zone de superposition des tapis, la ligne de contact entre la lisière arrière de la première nappe de renfort et la lisière avant de la seconde nappe de renfort se situe dans une zone non aimantée. La pointe avant de la second nappe de renfort reste attirée par le premier tapis de transfert sur la majeure partie de sa surface, et la pointe arrière de la première nappe de renfort est attirée par la zone aimantée du deuxième tapis de transfert en raison de la faible distance e séparant les deux tapis dans la zone de recouvrement.

Il est ainsi possible de faire passer la première nappe de renfort du premier tapis vers le second tapis sans provoquer de mouvement parasite de la partie avant de la deuxième nappe de renfort, tout en minimisant les mouvements libres de la partie arrière de la première nappe de renfort susceptibles d'en modifier la géométrie. La première nappe de renfort peut alors être amené vers la zone d'assemblage par le deuxième tapis de transfert, indépendamment de la seconde nappe de renfort.

On observera que lorsque l'angle b est égal à 90°, ce qui est le cas général des nappes de renfort carcasse le problème du maintien de l'angle des parties avant et arrière de la nappe peut se résoudre sans qu'il soit nécessaire de modifier les dispositifs de transfert couramment utilisés dans l'industrie, et dans lesquels les zones aimantées ont une forme généralement rectangulaire, ce qui revient à considérer que les angles a₁ et a₂ sont des angles droits.

La description qui suit s'appuie sur des modes préférentiels de réalisation de l'invention, et sur les figures 1 à 4 dans lesquelles :
- la figure 1 représente une vue schématique en coupe et en vue de dessus d'un dispositif selon l'invention, ainsi qu'une vue de dessus de détail en médaillon de la zone de recouvrement,
- la figure 2 représente une vue schématique en coupe et en vue de dessus d'un dispositif selon l'invention lors de l'étape d'évacuation de la première nappe de renfort.
- les figures 3, et 4 représentent des vues schématiques de dessus d'une forme particulière de réalisation de l'invention.

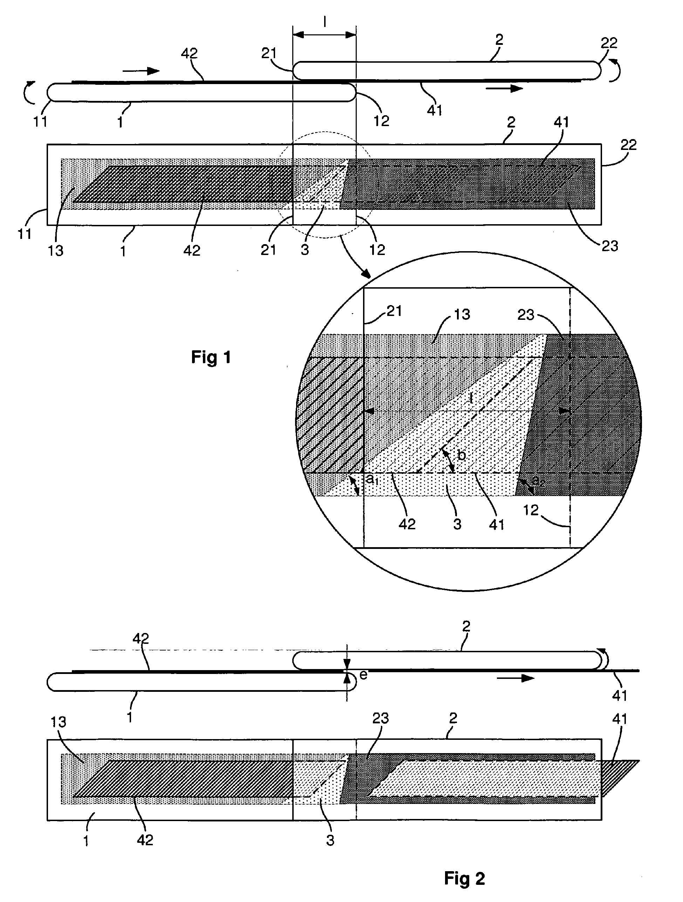

Le dispositif de transfert illustré à la figure 1 comprend un premier tapis de transfert 1 et un second tapis de transfert 2. Chacun de ces tapis est formé d'une bande transporteuse continue disposée entre deux rouleaux d'entraînement, situés aux deux extrémités du tapis de transfert, respectivement 11, 12 et 21, 22. La bande transporteuse circule à une vitesse régulée de manière à entraîner en translation les nappes de renfort, respectivement 41 et 42, maintenues à la surface de ladite bande transporteuse.

Les nappes de renfort 41 et 42 sont constituées de fils métalliques enrobés dans un mélange de caoutchouc et faisant un angle b avec la direction longitudinale. Ces fils métalliques sont du type ferromagnétique.

Chaque tapis possède une zone aimantée respectivement 13, 23, apte à maintenir les nappes de renfort plaquées contre la surface de la bande transporteuse. A cet effet des aimants sont disposés sous la surface de la bande à proximité de la face intérieure de la bande transporteuse et située à l'opposé de la face de la bande transporteuse en contact avec le produit à transférer. Les aimants peuvent être des aimants permanents ou, préférentiellement des électroaimants disposés de manière à produire un champ magnétique sur une zone (13, 23) délimitée de la bande transporteuse.

Les deux tapis se superposent sur une longueur l donnée, de sorte que la zone aimantée 13 du premier tapis 1 soit placée en vis-à-vis de la zone aimantée 23 du deuxième tapis 2. L'écart e entre les deux tapis (voir figure 2) est déterminé de manière à permettre la circulation des nappes de renfort d'une part, et de manière à ce que la nappe de renfort située sur le premier tapis 1 soit attirée par le dispositif magnétique du deuxième tapis 2 lorsque ladite nappe de renfort est placée au droit de la zone aimantée 23 dudit deuxième tapis 2.

En pratique, la distance e est sensiblement égale à l'épaisseur des nappes de renfort à transférer augmentée de 0,5 mm à 1 mm. Cette distance peut également être réglable pour adapter le dispositif de transfert à la variété dimensionnelle des nappes de renfort.

Le dispositif représenté dans les figures 1 à 4 prévoit que la zone aimantée 13 du premier tapis est disposé sur la partie verticalement supérieure du premier tapis, et que la zone aimantée 23 du deuxième tapis 2 est disposée sur la partie verticalement inférieure du deuxième tapis 2. On observera que cette disposition peut être inversée sans que cela modifie les principes généraux de l'invention.

Les zones aimantées 13, 23 ont une forme sensiblement trapézoïdale. Les bases des trapèzes sont parallèles à la direction longitudinale des tapis de transfert, et correspondant à la direction du mouvement des nappes de renfort. En revanche, les cotés joignant les deux bases situés au droit de la zone de superposition des tapis font un angle avec la direction longitudinale, respectivement a₁ et a₂. (voir médaillon de la figure 1).

La largeur de la zone aimantée est préférentiellement égale ou supérieure à la largeur des nappes de renfort à transférer. Toutefois il est possible d'obtenir des résultats sensiblement équivalents lorsque ladite largeur est légèrement inférieure à celle des nappes de renfort.

Les valeurs des angles a₁ et a₂ sont déterminées en fonction de l'angle b moyen formé par les fils des nappes de renfort avec la direction longitudinale. On s'arrange alors pour que l'angle a₁ soit inférieur à l'angle b, et que l'angle a₂ soit supérieur à l'angle b. De plus on dispose les tapis dans la zone de recouvrement de sorte que les zones aimantées 13 et 23 ne se superposent pas. Il en résulte la formation d'une zone 3 dans laquelle les flux magnétiques du premier tapis et du second tapis n'ont pas d'effet sur les éléments métalliques contenus dans les nappes de renfort.

En pratique, deux familles de nappe sont couramment utilisées dans l'industrie du pneumatique. Une première famille de nappe dont les angles varient entre 18° (bₘᵢₙ) et 26° (bₘₐₓ), et une deuxième famille de nappes dont les angles varient entre 50° (bₘᵢₙ) et 65° (bₘₐₓ).

La valeur de a₁ est comprise dans l'intervalle bₘᵢₙ - 5°, bₘᵢₙ, et la valeur de l'angle a₂ est comprise dans l'intervalle bₘₐₓ, bₘₐₓ + 5°, de manière à ce que la zone 3 ait une aire suffisante pour permettre la séparation des flux magnétiques, mais sans être trop importante pour réduire dans la mesure du possible la zone dans laquelle les nappes de renfort ne sont pas plaquées contre la surface d'un des tapis. Il en résulte que la valeur de a₁ est comprise entre 13° et 18° pour la première famille de nappes et entre 45° et 50° pour la seconde famille de nappes, et que la valeur de a₂ est comprise entre 26° et 31° pour la première famille de nappes et entre 65° et 70° pour la deuxième famille de nappes.

Lors du transfert d'une nappe de renfort 41 depuis le premier tapis 1 vers le deuxième tapis 2, la nappe de renfort 41, ou première nappe de renfort, est disposée sur le premier tapis 1 en tête d'un train de nappes de renfort identiques dans lequel la lisière de la partie arrière d'une nappe de renfort est en contact avec la lisière de la partie avant de la nappe de renfort suivante, on s'arrange dans une première étape pour faire avancer les deux tapis à la même vitesse.

La première nappe de renfort 41, passe du premier tapis au deuxième tapis en franchissant successivement la zone 13 qui maintien la nappe de renfort en contact avec la bande transporteuse du premier tapis, puis la zone 3 dans laquelle aucun flux magnétique ne s'exerce sur les fils de la première nappe de renfort, jusqu'à la zone 23 dans laquelle la nappe de renfort est attirée et plaquée sur la surface de la bande transporteuse du deuxième tapis 2 par les dispositifs magnétiques de la zone 23. La seconde nappe de renfort 42 avance en restant maintenue par la zone aimantée 13 du premier tapis1.

On arrête le mouvement du premier tapis 1 lorsque la lisière arrière de la première nappe de renfort 41 et la lisière avant de la seconde nappe de renfort 42 qui la suit immédiatement passent au droit de la zone non aimantée 3.

On poursuit enfin le transfert de la première nappe de renfort 41 par le second tapis 2 jusqu'à son évacuation complète du premier tapis, comme cela est illustré à la figure 2. La partie avant de la seconde nappe de renfort 42 reste au contact du premier tapis 1 et la partie arrière de la première nappe de renfort 41 est amenée au contact du deuxième tapis 2.

Le choix de la longueur I de la zone de superposition des deux tapis dépend de la valeur de l'angle b des fils de nappes de renfort avec la direction longitudinale et de la largeur des nappes de renfort à transférer. Plus l'angle b sera ouvert plus la longueur de superposition I pourra être faible et inversement. On s'arrange alors pour que la zone de superposition des tapis recouvre sensiblement l'ensemble de la zone non aimantée 3.

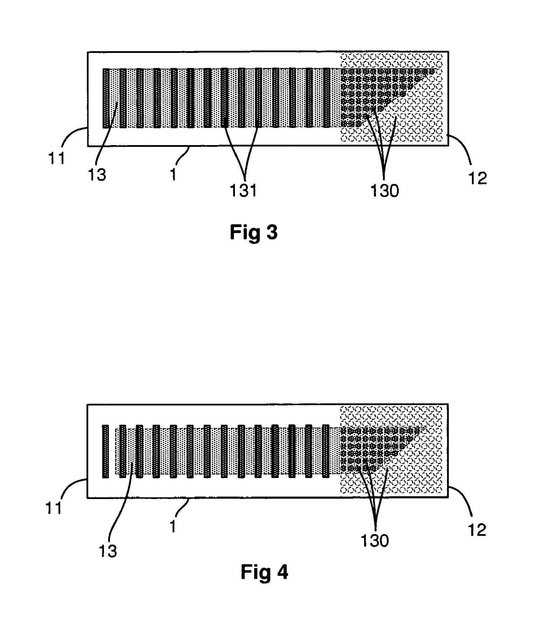

Les figures 3 et 4 illustrent un mode de réalisation particulier de l'invention dans lequel les zones aimantées respectivement 13 et 23 de chacun des tapis, respectivement 1 et 2, situées dans les parties respectives des tapis destinées à se superposer sont constituées par un ensemble d'électroaimants 130 disposés sous la surface de la bande transporteuse de façon matricielle.

Cet arrangement particulier permet de modifier la forme du trapèze, respectivement 13, 23, dans la zone de superposition des tapis, lorsque la valeur de l'angle b varie fortement d'une dimension de bande de renfort à une autre. En activant judicieusement certains électroaimants on peut modifier sensiblement la valeur des angles, respectivement a₁ et a₂, et adapter le dispositif de transfert à l'angle b des nappes de renfort à transférer.

Plus la taille et des électroaimants disposés dans cette zone du trapèze est faible et plus il sera possible de loger un grand nombre d'électroaimants sous la surface de la bande transporteuse, et plus précise sera la définition de la frontière magnétique du trapèze, respectivement 13, 23, dans la zone de superposition des tapis.

## Revendications

1. Dispositif de transfert destiné au transfert d'une nappe de renfort (41, 42) ayant la forme générale d'un parallélogramme non rectangle et comportant des fils de renfort ayant des propriétés ferromagnétiques faisant un angle aigu donné avec la direction longitudinale de ladite nappe de renfort, comprenant au moins deux tapis de transfert (1, 2) superposés sur une longueur l donnée et séparés d'une distance e donnée et de faible valeur, chacun des tapis comprenant une zone aimantée (13, 23) de forme trapézoïdale dont les bases sont parallèles à la direction longitudinale des tapis, et destinées à plaquer la nappe de renfort contre la surface mobile desdits tapis de transfert, **caractérisé en ce que**, dans la zone où les tapis se superposent, le coté du trapèze reliant les deux bases de la zone aimantée (23) du second tapis (2) forme un angle a₂ avec la direction longitudinale inférieur ou égal à 90°, et le coté du trapèze reliant les deux bases de la zone aimantée (13) du premier tapis (1) forme un angle a₁ avec la direction longitudinale inférieur à l'angle a₂, et **en ce que** les zones aimantées (13, 23) des deux tapis (1, 2) ne se superposent pas, de manière à former une zone non aimantée (3) placée au droit de la zone de superposition des tapis de transfert (1, 2).

2. Dispositif selon la revendication 1 dans lequel la valeur de a₁ est comprise entre 13° et 18°, et la valeur de a₂ est comprise entre 26° et 31°.

3. Dispositif selon la revendication 1 dans lequel la valeur de a₁ est comprise entre 45° et 50° et la valeur de a₂ est comprise entre 65° et 70°.

4. Dispositif de transfert selon l'une des revendications 1 à 3, dans lequel les zones aimantées sont formées par des aimants permanents placés à proximité immédiate de la partie mobile du tapis de transfert en contact avec la nappe de renfort.

5. Dispositif de transfert selon l'une des revendications 1 à 4, dans lequel les zones aimantées sont formées par des électroaimants placés à proximité immédiate de la partie mobile du tapis de transfert en contact avec la nappe de renfort.

6. Dispositif de transfert selon la revendication 5, dans lequel la zone aimantée (13, 23) de chacun des tapis de transfert (1, 2) et placée dans la zone de superposition des tapis, est formée par une multiplicité d'électroaimants (130) disposés de façon matricielle, et pouvant être activés de sorte à modifier l'angle (a₁, a₂) formé par le coté du trapèze reliant les deux bases de la zone aimantée (13, 23) situé dans cette zone.

7. Procédé de transfert, à l'aide d'un dispositif de transfert selon l'une des revendications 1 à 6, depuis ledit premier tapis (1) sur ledit second tapis (2), d'une nappe de renfort (41) ayant la forme générale d'un parallélogramme et comportant des fils de renfort ayant des propriétés ferromagnétiques et faisant un angle donné b inférieur à 90°avec la direction longitudinale de ladite nappe de renfort, dans lequel on détermine les valeurs des angle a₁ et a₂ de sorte que l'angle a₂ soit plus grand ou égal à l'angle b et que l'angle a₁ soit plus petit que l'angle b.

8. Procédé selon la revendications 7, dans lequel ladite nappe de renfort (41) est disposée sur le premier tapis (1) en tête d'un train de nappes de renfort identiques dans lequel la lisière de la partie arrière d'une nappe de renfort est en contact avec la lisière de la partie avant de la nappe de renfort suivante, procédé dans lequel,
- on met les deux tapis (1, 2) en mouvement à des vitesses de translations identiques de manière à faire passer la première nappe de renfort depuis le premier tapis (1) sur le deuxième tapis (2),
- on arrête le mouvement du premier tapis (1) lorsque la lisière arrière de la première nappe de renfort (41) et la lisière avant de la seconde nappe de renfort (42) qui la suit passent au droit de la zone non aimantée (3),
- on poursuit le transfert de la première nappe de renfort (41) sur le second tapis (2) jusqu'à son évacuation complète du premier tapis (1).

## Claims

1. Transfer device intended for transferring a reinforcing ply (41, 42) having the overall shape of a non-rectangular parallelogram and containing reinforcing threads with ferromagnetic properties making a given acute angle with the longitudinal direction of the said reinforcing ply, comprising at least two transfer belts (1, 2) which overlap over a given length 1 and are separated by a given and small-sized distance e, each of the belts comprising a magnetized region (13, 23) of trapezoidal shape, the bases of which are parallel to the longitudinal direction of the belts and are intended to hold the reinforcing ply firmly against the moving surface of the said transfer belts, **characterized in that**, in the region of overlap of the belts, the side of the trapezium connecting the two bases of the magnetized region (23) of the second belt (2) forms an angle a₂ with the longitudinal direction which is smaller than or equal to 90°, and the side of the trapezium connecting the two bases of the magnetized region (13) of the first belt (1) forms an angle a₁ with the longitudinal direction which is smaller than the angle a₂, and **in that** the magnetized regions (13, 23) of the two belts (1, 2) do not overlap, so as to form a non-magnetized region (3) positioned in line with the region of overlap of the transfer belts (1, 2).

2. Device according to Claim 1, in which the value of a₁ is comprised between 13° and 18° and the value of a₂ is comprised between 26° and 31°.

3. Device according to Claim 1, in which the value of a₁ is comprised between 45° and 50° and the value of a₂ is comprised between 65° and 70°.

4. Transfer device according to one of Claims 1 to 3, in which the magnetized regions are formed by permanent magnets situated in close proximity to the moving part of the transfer belt in contact with the reinforcing ply.

5. Transfer device according to one of Claims 1 to 4, in which the magnetized regions are formed by electromagnets situated in close proximity to the moving part of the transfer belt in contact with the reinforcing ply.

6. Transfer device according to Claim 5, in which the magnetized region (13, 23) of each of the transfer belts (1, 2) and positioned in the region of overlap of the belts, is formed by a plurality of electromagnets (130) arranged in a matrix configuration and which can be activated in such a way as to modify the angle (a₁, a₂) formed by the side of the trapezium connecting the two bases of the magnetized region (13, 23) situated in this region.

7. Method for transferring, using a transfer device according to one of Claims 1 to 6, from the said first belt (1) to the said second belt (2), a reinforcing ply (41) having the overall shape of a parallelogram and containing reinforcing threads with ferromagnetic properties and making a given angle b smaller than 90° with the longitudinal direction of the said reinforcing ply, in which method the values of the angles a₁ and a₂ are determined in such a way that the angle a₂ is larger than or equal to the angle b and in such a way that the angle a₁ is smaller than the angle b.

8. Method according to Claim 7, in which the said reinforcing ply (41) is placed on the first belt (1) at the start of a succession of identical reinforcing plies in which the selvedge of the rear part of one reinforcing ply is in contact with the selvedge of the front part of the next reinforcing ply, in which method,
- the two belts (1, 2) are set in motion at identical translational speeds so as to cause the first reinforcing ply to be transferred from the first belt (1) onto the second belt (2),
- the motion of the first belt (1) is halted when the rear selvedge of the first reinforcing ply (41) and the front selvedge of the second reinforcing ply (42) following it come into line with the non-magnetized region (3),
- transfer of the first reinforcing ply (41) onto the second belt (2) is continued until it has completely left the first belt (1).

## Patentansprüche

1. Verlagerungsvorrichtung, die zur Verlagerung einer Verstärkungslage (41, 42) bestimmt ist, die die allgemeine Form eines nicht rechtwinkligen Parallelogramms hat und Verstärkungsdrähte mit ferromagnetischen Eigenschaften aufweist, die einen gegebenen spitzen Winkel mit der Längsrichtung der Verstärkungslage bilden, die mindestens zwei über eine gegebene Länge 1 übereinander liegende und um einen gegebenen Abstand e geringen Werts voneinander getrennte Verlagerungsbänder (1, 2) enthält, wobei jedes der Bänder eine trapezförmige magnetisierte Zone (13, 23) enthält, deren Basen parallel zur Längsrichtung der Bänder sind, und dazu bestimmt sind, die Verstärkungslage gegen die bewegliche Fläche der Verlagerungsbänder zu drücken, **dadurch gekennzeichnet, dass** in der Zone, in der die Bänder übereinander liegen, die Seite des Trapezes, die die zwei Basen der magnetisierten Zone (23) des zweiten Bands (2) verbindet, einen Winkel a₂ mit der Längsrichtung kleiner als oder gleich 90° bildet, und die Seite des Trapezes, die die zwei Basen der magnetisierten Zone (13) des ersten Bands (1) verbindet, einen Winkel a₁ mit der Längsrichtung kleiner als der Winkel a₂ bildet, und dass die magnetisierten Zonen (13, 23) der zwei Bänder (1, 2) nicht übereinander liegen, um eine nicht magnetisierte Zone (3) zu bilden, die im rechten Winkel vor der Überlagerungszone der Verlagerungsbänder (1, 2) angeordnet ist.

2. Vorrichtung nach Anspruch 1, bei der der Wert von a₁ zwischen 13° und 18° und der Wert von a₂ zwischen 26° und 31° liegt.

3. Vorrichtung nach Anspruch 1, bei der der Wert von a₁ zwischen 45° und 50° und der Wert von a₂ zwischen 65° und 70° liegt.

4. Verlagerungsvorrichtung nach einem der Ansprüche 1 bis 3, bei der die magnetisierten Zonen von Dauermagneten gebildet werden, die in direkter Nähe des beweglichen Bereichs des Verlagerungsbands in Kontakt mit der Verstärkungslage angeordnet sind.

5. Verlagerungsvorrichtung nach einem der Ansprüche 1 bis 4, bei der die magnetisierten Zonen von Elektromagneten gebildet werden, die in direkter Nähe des beweglichen Bereichs des Verlagerungsbands in Kontakt mit der Verstärkungslage angeordnet sind.

6. Verlagerungsvorrichtung nach Anspruch 5, bei der die magnetisierte Zone (13, 23) jedes der Verlagerungsbänder (1, 2), die in der Überlagerungszone der Bänder angeordnet ist, von einer Vielzahl von Elektromagneten (130) gebildet wird, die matrixartig angeordnet sind, und die so aktiviert werden können, dass sie den Winkel (a₁, a₂) ändern können, der von der die zwei Basen der magnetisierten Zone (13, 23) verbindenden Seite des Trapezes gebildet wird, die sich in dieser Zone befindet.

7. Verfahren zur Verlagerung, mit Hilfe einer Verlagerungsvorrichtung nach einem der Ansprüche 1 bis 6, vom ersten Band (1) auf das zweite Band (2), einer Verstärkungslage (41), die die allgemeine Form eines Parallelogramms hat und Verstärkungsdrähte aufweist, die ferromagnetische Eigenschaften haben und einen gegebenen Winkel b geringer als 90° mit der Längsrichtung der Verstärkungslage bilden, bei dem die Werte der Winkel a₁ und a₂ so bestimmt werden, dass der Winkel a₂ größer als der oder gleich dem Winkel b ist, und dass der Winkel a₁ kleiner als der Winkel b ist.

8. Verfahren nach Anspruch 7, bei dem die Verstärkungslage (41) auf dem ersten Band (1) am Kopf einer Partie von gleichen Verstärkungslagen angeordnet ist, bei dem der Saum des hinteren Bereichs einer Verstärkungslage mit dem Saum des vorderen Bereichs der folgenden Verstärkungslage in Kontakt ist, Verfahren, bei dem
- die zwei Bänder (1, 2) mit gleichen Translationsgeschwindigkeiten in Bewegung versetzt werden, um die erste Verstärkungslage vom ersten Band (1) auf das zweite Band (2) übergehen zu lassen,
- die Bewegung des ersten Bands (1) angehalten wird, wenn der hintere Saum der ersten Verstärkungslage (41) und der vordere Saum der zweiten Verstärkungslage (42), die auf sie folgt, im rechten Winkel vor der nicht magnetisierten Zone (3) vorbeilaufen,
- die Verlagerung der ersten Verstärkungslage (41) auf das zweite Band (2) fortgesetzt wird, bis sie das erste Band (1) vollständig verlassen hat.
